Europäisches Patentamt

European Patent Office

Office européen des brevets

(19)

(11) Publication number: **0 110 715**
A1

## (12) EUROPEAN PATENT APPLICATION

(21) Application number: **83307296.0**

(22) Date of filing: **30.11.83**

(51) Int. Cl.³: **C 02 F 3/04, C 02 F 3/06, C 02 F 3/08**

(30) Priority: **02.12.82 US 446094**

(43) Date of publication of application: **13.06.84**
Bulletin 84/24

(84) Designated Contracting States: **AT BE CH DE FR GB IT LI LU NL SE**

(71) Applicant: **USS ENGINEERS AND CONSULTANTS, INC., 600 Grant Street, Pittsburgh Pennsylvania 15230 (US)**

(72) Inventor: **Hawthorne, John Oakes, 933 Harvard Road, Monroeville Pennsylvania 15146 (US)**
Inventor: **Krupinski, Kenneth Charles, 6 Claridge Road, Export Pennsylvania 15632 (US)**

(74) Representative: **Spencer, Graham Easdale et al, A.A. Thornton & CO Northumberland House 303-306, High Holborn, London WC1V 7LE (GB)**

(54) Method of nitrification of ammonia-containing wastewaters.

(57) A process is described for treating wastewater, such as blast furnace blowdown wastewater, containing 100 to 600 ppm ammonia and having a chemical oxygen demand of 50 to 500 ppm and possible further contaminants, including cyanide, cyanate, thiocyanate, sulfide and/or organic materials. Substantially complete nitrification of the ammonia into nitrite or nitrate, is achieved by microbially treating the wastewater in a fixed film biological treatment system, such as a rotating biological contactor, which includes microorganisms capable of converting ammonia to nitrite and microorganisms capable of converting nitrite to nitrate. The system preferably also contains microorganisms for removing cyanide and many be periodically acclimatized to expected peaks in free cyanide concentration.

ACTORUM AG

# METHOD OF NITRIFICATION OF AMMONIA-CONTAINING WASTEWATERS

This invention relates to a method of nitrification of ammonia-containing wastewaters, usually also containing free cyanide and other contaminants.

Many efforts have been made to solve the problem of removing ammonia and other contaminants from low ammonia content wastewater, such as blast furnace blowdown wastewater.

The alkaline chlorination method has been utilized to remove ammonia, phenol, and cyanide from these low ammonia content wastewaters. However, alkaline chlorination requires large amounts of costly chemicals and is a complex process which involves potentially risky chlorine handling.

According to the present invention, there is provided a process for treating wastewater containing 50 to 600 ppm ammonia and having a chemical oxygen demand of 50 to 150 ppm to achieve substantially complete nitrification of said ammonia into nitrite and/or nitrate, the process comprising mirobially treating the wastewater in a fixed film biological treatment system which includes microorganisms capable

- 2 -

of converting ammonia to nitrite and microorganisms capable of converting nitrite to nitrate, adding phosphorus to the wastewater, maintaining the pH of the wastewater in a range in which generation of free ammonia during the treatment is avoided, and controlling the concentration of contaminants in the wastewater to avoid peak concentrations which would damage said microorganisms, including pre-treating, as necessary, to remove contaminants.

Since most blast furnace wastewaters contain small amounts of free cyanide, the fixed film biological treatment system preferably also contains a microorganism for removing free cyanide from the wastewater. It has been unexpectedly found that problems arising from peaks in free cyanide concentration can be avoided by acclimatizing on of the fixed film system to such anticipated free cyanide levels.

The contaminated wastewater may, for example, be that produced in a coal gasification process or that produced during the manufacture of iron in a blast furnace. In the case of blast furnace gas, entrained dust must be removed before the gas can be used as a fuel. The wet scrubbing used to clean the gas results in the introduction of contaminants such as ammonia, cyanide, thiocyanate, and phenol into the process water.

- 3 -

The fixed film biological treatment system is a system in which biomass grows on a support and the wastewater is able to pass over the support in such a way as to enable desired conversion of the ammonia and other contaminants. A preferred fixed film system is a rotating biological contactor (RBC). While most of the discussion herein will be directed to the RBC, it will be understood that other fixed film systems could be used.

A preferred RBC consists of a series of closely spaced circular polyethylene disks known as "media" fixed to a horizontal shaft mounted across a tank with about 40 percent of each disk submerged in the wastewater. The shaft is continuously rotated at about 1.5 revolutions per minute and a biological slime (biomass) grows on the "media" by using the contaminants present in the wastewater as food. Aeration is provided by the rotating action, which repeatedly exposes the disks to the air after contacting them with the wastewater. Excess biomass is sheared off in the tank where the rotating action of the media maintains the solids in suspension so they can be transported from the RBC unit.

The bacteria responsible for the oxidation of ammonia-nitrogen ($NH_3$-N) to nitrate-nitrogen ($NO_3$-N), collectively called nitrifiers, consist of

the genera <u>Nitrosomonas</u> and <u>Nitrobacter</u>. The oxidation of ammonia to nitrate is a two-step sequential reaction as follows:

$$2NH_4^+ + 3O_2 \xrightarrow{\text{Nitrosomonas}} 2NO_2^- + 4H^+ + 2H_2O$$

$$2NO_2^- + O_2 \xrightarrow{\text{Nitrobacter}} 2NO_3^{--}$$

The overall oxidation reaction can be written:

$$NH_4^+ + 2O_2 \text{ ------------ } NO_3^- + 2H^+ + H_2O$$

Assuming that the emprical formula for the bacterial cells is $C_5H_7NO_2$, the overall synthesis and oxidation reaction is

$$NH_4^+ + 1.83\ O_2 + 1.98\ HCO_3^- \text{ -------- } 0.021\ C_5H_7NO_2 +$$

$$1.041\ H_2O + 0.98\ NO_3^- + 1.88\ H_2CO_3$$

From this equation it can be calculated that for each pound (lb) of $NH_3$-N oxidized the following are required:

  1)  7.14 kg of calcium carbonate to neutralize the acid produced.

  2)  0.72 kg of calcium carbonate to provide a carbon source for bacteria growth.

3)  4.18 kg of oxygen for the oxidation reaction (the oxygen is obtained from the air via the rotating disk).

The pH of the treatment is preferably maintained at 6.5 to 9.0.  A pH of 7 to 8 is most preferred.

The temperature of the process is preferably maintained at 40 to $100^{\circ}$F (4 to $38^{\circ}$C).  The temperature is most preferably 70 to $90^{\circ}$F (21 to $32^{\circ}$C).

The dissolved oxygen present in the wastewater is preferably in an amount of at least 1.5 ppm.

The amount of ammonia initially present in said wastewater is preferably 200 to 400 ppm and the chemical oxygen demand is preferably 90 to 130 ppm.

The wastewater is preferably pretreated to remove alkaline earth and heavy metal ions.  Zinc and lead ions have been shown to be particularly bad for the operation of the process, and therefore should preferably be removed.

The fixed film systems are preferably used in series for most efficient removal of contaminants such as ammonia.  For example, three or four rotating biological contactors may be used in series to reduce the ammonia content of the wastewater from 200 ppm of ammonia to about 1 ppm of ammonia.

- 6 -

Preferably the process is conducted so that the rotating biological contactor has an ammonia loading of up to about 1.4 pounds of ammonia per 1000 square feet of surface area (6.8 kg per 1000 $m^2$), and more preferably 0.9 to 1.3 pounds of ammonia per 1000 square feet of surface area (4.4 to 6.3 kg per 1000 $m^2$).

Free cyanide is known to have a detrimental effect on the nitrifiers present in the fixed film biological system. Cyanide (free and refractory) is present in varying concentrations in blast-furnace recycle water, and a large increase in free CN is observed during the blow out (shutdown) of blast furnaces. Normally, the free CN concentration in the recycle water is below about 0.3 ppm, with occasional random peaks to about 3 to 15 ppm lasting a few hours. However, during a blow out, the free CN may peak above 20 ppm and remain above about 2 ppm for twelve hours. During normal blast-furnace operations, the free CN in the RBC tank is usually less than in the recycle water because some CN degrading bacteria are present in the fixed film biological system and reduce the CN concentration below 0.05 mg/l. Large peaks in free CN concentration, or a sustained increase in free CN as during a furnace blow out, overtax the CN degrading bacteria and the free CN concentration in the RBC tank increases. It was found that free CN has an almost immediate effect on nitrification when the concentration of free CN in the RBC tank exceeds about 0.5 mg/l; nitrification ceases but the effect is only temporary and nitrification resumes when the free CN returns to normal. High concentration of free CN can also kill the microorganisms, thereby causing nitrification to cease.

However, it was also determined that the fixed film biological system can be acclimatized to high concentrations of free CN in the RBC influent.

### Example

A pilot RBC unit containing the same type of 12 foot (3.7 m) diamter polyethylene disks that are used in a full-scale RBC was used. The disk rotated at 1.5 rpm. The RBC tank was divided into four cells, each holding 700 gallons (2650 $\ell$) of water, which can be operated in series or in parallel depending on the position of valves located on the feed-line manifold. The flow to the unit was controlled by metering pumps.

The pH of each of the four cells was independently maintained at 7.2 by means of a pH controller and a sodium carbonate solution pump. Phosphoric acid was added to the sodium carbonate solution to provide phosphorus, a required nutrient.

- 8 -

To initiate the growth of the biomass, the RBC was seeded with sludge from a coke-plant biological-treatment facility. The unit was filled with plant-service water to which was added 10 milligrams per litre (mg/l) of $NH_3$-N as ammonium hydroxide and 100 gallons (379 $\ell$) of the biological sludge. A mixture of blast-furnace recycle-water blowdown and river water was then metered to the RBC. The initial concentration of blowdown in the service water was 10 percent, and as the biomass developed, the percentage of blowdown was gradually increased to 100 percent over a three-week period. During the first 15 days of start-up, a portion of the RBC effluent was recycled to return any nitrifiers lost in the effluent and to enhance the seeding process.

Analyses of the RBC influent and effluents were performed on individual samples except for influent $NH_3$-N, which was determined on a 24-hour continuously composited sample. The only parameter continuously recorded was pH; all other analyses were performed once a day, twice a week, or once a week, as indicated below in Table I.

0110715

- 9 -

## TABLE I

1.        One a day:

     a.  pH
     b.  Dissolved oxygen
     c.  Temperature
     d.  Conductivity
     e.  Alkalinity
     f.  Free cyanide
     g.  Ammonia-nitrogen

2.        Twice a week:

     a.  Nitrite - nitrogen
     b.  Nitrate - nitrogen
     c.  Phosphate
     d.  Thiocyanate
     e.  Chemical oxygen demand
     f.  Cyanate
     g.  Cyanide, total
     h.  Phenol
     i.  Total suspended solids
     j.  Volatile suspended solids

3.        One a week:

     a.  Hardness - Titration with ethylenediamine-
         tetraacetic acid

An 87-day demonstration test was conducted during the pilot testing program. The purpose of the test was to duplicate, as closely as possible, the conditions that would be expected to exist in a full-scale RBC facility. The RBC influent was taken from a cooling-tower hot well; cells 1, 2, and 3 were operated in series; the disk assembly was covered and insulated; and the influent flow was maintained at a fairly constant rate.

During the test the $NH_3$-N concentration in the RBC influent varied between 190 and 520 mg/l and the average $NH_3$-N content of the RBC effluent was 1.1 mg/l. No equalization of the RBC influent was provided during the pilot study, but a tank providing concentration equalization would be a requirement in a full-scale facility.

As shown below in Table II the $NH_3$-N, thiocyanate, cyanate, and free cyanide were almost completely converted to nitrate. The alkalinity of the influent is consumed, and additional alkalinity as $Na_2CO_3$ was added during the demonstration test to neutralize the acid produced. The hardness did not decrease, indicating no scaling or calcium precipitation, and the dissolved solids increased because of the addition of $Na_2CO_3$. The phosphate content increased because phosphoric acid is added to the $Na_2CO_3$ solution to provide phosphorus.

- 11 -

## TABLE II

### RBC Demonstration-Test-Data Summary
### Three-Stage Series Flow

|  | RBC Influent | RBC Effluent |
|---|---|---|
| Water Temperature, °C | 38. | 28. |
| pH | 7.48 | 7.21 |
| Alkalinity, mg/$\ell$ CaCO$_3$ | 554. | 35. |
| Hardness, Mg/$\ell$ CaCO$_3$ | 1250. | 1270. |
| Conductivity, umhos/cm | 6320. | 6840. |
| Dissolved Oxygen, mg/$\ell$ | 1.6 | 5.0 |
| Ammonia-nitrogen mg/$\ell$ | 329. | 1.1 |
| Nitrite-nitrogen, mg/$\ell$ | 0.6 | 1.2 |
| nitrate-nitrogen, mg/$\ell$ | 0.6 | 342. |
| Thiocyanate, mg/$\ell$ | 2.2 | 0.01 |
| Cyanate, mg/$\ell$ | 32. | 0.5 |
| Cyanide, Refractory, mg/$\ell$ | 0.5 | 0.2 |
| Cyanide, Free, mg/$\ell$ | 0.5 | 0.01 |
| Cyanide, Total, mg/$\ell$ | 1. | 0.2 |
| Chemical Oxygen Demand, mg/$\ell$ | 110. | 56. |
| Phosphate, mg/$\ell$ | 0.4 | 4.6 |
| Phenol, mg/$\ell$ | 0.06 | <0.006 |
| Total Suspended Solids, mg/$\ell$ | 76. | 14. |
| Volatile Suspended Solids, mg/$\ell$ | 13. | 7. |
| Total Dissolved Solid mg/$\ell$ | 3400. | 5700. |

The distribution of NH$_3$-N, NO$_2$-N, and NO$_3$-N in the three stages is shown below in Table III. Note the decrease in NH$_3$-N and NO$_2$-N and the increase in NO$_3$-N in stages 1 through 3. The higher concentration of NH$_3$-N in stages 1 and 2 inhibited the conversion of NO$_2$ to NO$_3$ by <u>Nitrobacter</u> and nitrite accumulated. The distribution of the various forms of nitrogen in the RBC influent and effluent is

- 12 -

shown in Table IV.  The data in the table show that 96 percent of the nitrogen present in the RBC influent is in the form of $NH_3$ (3% from cyanate and 1% from nitrite, nitrate, and cyanide), whereas 97 percent of the nitrogen in the RBC effluent is present in the form of nitrate (2% of the nitrogen is incorporated into the biomass).

TABLE III

Distribution of Ammonia-, Nitrite-, and Nitrate-Nitrogen in the RBC Stages

Concentration, mg/ℓ

|          | Influent | Stage 1 | Stage 2 | Stage 3 (Effluent) |
|----------|----------|---------|---------|--------------------|
| $NH_3$-N | 329.     | 138.    | 22.     | 1.1                |
| $NO_2$-N | 0.6      | 46.     | 35.     | 1.2                |
| $NO_3$-N | 0.6      | 157.    | 279.    | 342.               |

TABLE IV

Distribution of Nitrogen
weight percent

|          | Influent | Effluent |
|----------|----------|----------|
| $NH_3$-N | 96.20    | 0.32     |
| $NO_2$-N | 0.16     | 0.36     |
| $NO_3$-N | 0.19     | 97.33    |
| SCN-N    | 0.16     | <0.02    |
| CNO-N    | 3.10     | 0.05     |
| CN-N     | 0.19     | <0.02    |
| Biomass  | -        | 1.94     |

- 13 -

Two types of plastic media are available from an RBC manufacture. Standard-density has a 7/8-inch (22 mm) spacing between the disks and high-density media has a 1/2-inch (13 mm) spacing. The standard-density media are normally used in applications in which a thick biomass is developed such as in the conversion of carbonaceous materials in a municipal-sewage treatment plant. Because nitrifying bacteria do not develop as thick a biomass as organisms that convert carbonaceous materials, the closer-spaced media can be used for nitrification. The high-density media provide 50 percent more surface area per given shaft length than standard-density media; that is, a 26 foot (7.9 m) long shaft with 12 foot (3.7 m) diameter disks will provide 100,000 and 150,000 square feet (9290 to 13935 $m^2$) of surface area with standard-density and high-density media, respectively.

The pilot RBC had standard-density media and these were used in cells 1, 2, and 3 during the entire test program. To determine whether the high-density media are compatible with blast-furnace recycle water, the media in cell 4 were replaced with high-density media about half-way through the pilot study. The nitrification rates obtained with the high-density media were comparable to rates achieved with the standard-density media. At the end of the pilot study,

- 14 -

sheets of standard-density and high-density media were removed, and both were found to have a uniform coating of biomass over the entire surface of the sheet. Therefore, the high-density media performed satisfactorily and are recommended for use in a full-scale facility.

The shaft weight was measured about twice a month by using load cells. The load cells were placed under the two shaft bearings, and the shaft weight was measured with the disks rotating and static. The weight of the disks and shaft over an 11-month period increased steadily from 5200 to 6800 pounds (2359 to 3084 kg).

A steady increase in biomass growth took place during the 11-month period, with no sign of a leveling off in weight gain. A maximum nitrifier thickness of about 2 mm is expected when the biomass growth rate and biomass sloughing rate are balanced. Therefore, at the growth rates shown, the shaft weight would show a steady increase for an additional two or more years. A steady increase in the nitrification rate would not be expected because photomicrographs of the biomass show that the viable organisms are mostly at the surface of the biomass.

- 15 -

The power consumption of the electric motor that rotated the shaft was measured daily with a voltmeter and an ammeter. The average power consumption remained fairly constant at about 1500 watts and showed no tendency to increase, even though the shaft weight increased by about 1600 lb (726 kg).

Samples of the biomass were scraped off the disks and the chemical composition was determined as shown below in Table V. The biomass contained 91 percent water, and 49 percent of the dry biomass was volatile. In Table VI the carbon, hydrogen, nitrogen, phosphorus, and oxygen contents of the volatile portion of the biomass are compared with the theoretical composition of nitrifying bacteria. Except for the nitrogen content the agreement is good.

## TABLE V

### Chemical Analysis of Biomass
#### (Dry Basis)

| | |
|---|---|
| C, wt % | 25.7 |
| H | 3.9 |
| N | 2.2 |
| P | 1.7 |
| Fe | 14.8 |
| Ca | 2.9 |
| Na | 0.7 |
| Volatile Matter | 49.4 |

0110715

- 16 -

## TABLE VI

Comparison of Elemental Analysis of Biomass
to Theoretical Composition

|  | Composition of Volatile Matter wt % | Theoretical Composition wt % |
|---|---|---|
| C | 52.0 | 51 7 |
| H | 7.8 | 6.0 |
| N | 4.4 | 12.1 |
| P | 3.4 | 2.6 |
| O (by difference) | 32.4 | 27.6 |

Over the period of the study, the blast-furnace recycle-water blowdown contained about 100 mg/l of total suspended solids (TSS) and about 15 mg/l of volatile suspended solids (VSS), whereas the effluent from the third stage contained about 26 and 12 mg/l of TSS and VSS, respectively.

Because the suspended-solids content of the RBC effluent is variable, a clarification test was conducted over a six-week period. During this period, the effluent from cell 3 was diverted to a small clarifier constructed from a 55-gallon (208ℓ) drum. During this period cells 1, 2, and 3 were operated in series (influent + cell 1 + cell 2 + cell 3 + clarifier

0110715

- 17 -

+ sewer) and after steady-state operation was achieved, samples of the RBC influent and effluent from each cell and the clarifier overflow were analyzed for TSS and VSS. The results of this test are summarized below in Table VII. The average TSS concentration in the RBC influent is 170 mg/l, the TSS in the RBC effluent (stage 3) is 13 mg/l, and the clarifier overflow contains 6 mg/l of TSS; no flocculating polymer was added during this test.

Pressure filtration tests were conducted in a 4-litre Dicalite bomb filter press with and without filter aids. The results of the pressure-filtration tests are summarized below in Table VIII. The tests demonstrate that a filtrate containing less than 5 mg/l of TSS can be obtained at a high filtration rate of about 1.4 gallon per minute per square foot for an 8-hour cycle (57 $\ell$/min/m$^2$).

TABLE VII

Clarification of RBC Effluent

Average Solids Concentration, mg/$\ell$

| RBC Influent | | Stage 1 | | Stage 2 | | RBC Effluent (Stage 3) | | Clarifier Overflow | |
|---|---|---|---|---|---|---|---|---|---|
| TSS* | VSS** | TSS | VSS | TSS | VSS | TSS | VSS | TSS | VSS |
| 170 | 16 | 30 | 12 | 16 | 5 | 13 | 6. | 6 | 2 |

0110715

- 18 -

## TABLE VIII

### Pressure-Filtration Tests on RBC Effluent
### (4-Litre Dicalite Bomb Filter Press

| Test Conditions | | | Solids Concentration, mg/$\ell$ | | | |
|---|---|---|---|---|---|---|
| | | | Before Filtration | | After Filtration | |
| Test No. | Temp., °C | Filter Aid[1] | TSS | VSS | TSS | VSS |
| 1 | 14 | Superaid | 20 | 9 | 8 | 2 |
| 2 | 23 | Superaid | 18 | 9 | 11 | 7 |
| 3 | 21 | Speedplus | 10 | 6 | <0.5 | <0.5 |
| 4 | 24 | Speedplus | 14 | 8 | 2 | 2 |
| 5 | 24 | 5000 | 41 | 11 | 6 | 4 |
| 6 | 14 | 5000 | 20 | 9 | 4 | 4 |

| Test No. | Filtration Rate | |
|---|---|---|
| | 4-hr Cycle, $\ell$/min/m$^2$ | 8-hr Cycle, $\ell$/min/m$^2$ |
| 1 | 17 | 10 |
| 2 | 33 | 6 |
| 3 | 55 | 33 |
| 4 | 89 | 56 |
| 5 | 77 | 44 |
| 6 | 25 | 14 |

Filteraids:

Superaid — low clarity, relative-flow-rate rating 1 (fast)

Speedplus — medium clarity, relative-flow-rate rating 7

5000 — high clarity, relative-flow-rate rating 20.5 (slow)

0110715

- 19 -

It was found that the RBC effluent can be easily clarified. The choice of a specific clarification method will depend on the TSS discharge limit and the type of sludge desired.

During the study, the RBC and ancillary equipment were carefully maintained and operated; consequently there were no equipment failures of long duration. In a full-scale facility with 10 or more RBC units, failures of various systems lasting 12 to 24 hours may be possible. Possible areas of failure are loss of the sodium carbonate solution pumping, loss of disk rotation, and loss of influent flow. These possible conditions were simulated to determine their effect on the biomass and nitrification, especially how the biomass recovered from the shock caused by the failure.

The sodium carbonate solution pump was shut off for 24 hours to one cell of the RBC, while influent flow and disk rotation were maintained. The pH of the water in the RBC cells dropped from the normal 7.2 to 6.4 and the nitrification rate decreased about 50 percent during the outage. After the pump was restarted, about 72 hours was required for the nitrification rate to return to normal. The 24-hour outage is probably a "worst case" simulation because the pH dropped significantly within one hour of the pump failure and in a full-scale facility a pH alarm would alert the operator to the problem.

The disk rotation was stopped for 23 hours, but about every 6 hours the disks were rotated for four revolutions to keep the biomass moist (the biomass will die if allowed to dry out). During the stoppage, the alkalinity, pH, and $NH_3$-N all increased because of loss of nitrification, but the effect was temporary and nitrification returned to normal after disk rotation was resumed.

The flow to one of the cells was stopped for 36 hours, while normal rotation and pH control were maintained. Once residual $NH_3$ in the cell was converted, nitrification ceased but resumed immediately when the flow was restarted. Therefore, depriving the biomass of food for 36 hours does not appear to harm the bacteria. During the test, the final stage received very little $NH_3$ for over a week with no apparent damage to the biomass, which confirms the results of this failure-simulation test.

Prior to a blast-furnace blow out, potassium cyanide was gradually added to the RBC influent. The concentration of free CN in the influent was increased to 27 mg/l over a 25-day period, and consequently additional cyanide-degrading bacteria developed in the biomass with no effect on the nitrifying bacteria.

0110715

- 21 -

During the blow out, the free CN concentration in the recycle water increased from 0.1 to 16 mg/l and flow of recycle water to the RBC was maintained. The addition of potassium cyanide was stopped and nitrification continued.

To determine the effect of a blow out on an unacclimatized fixed film biological system, potassium cyanide was added to one of the RBC cells at a rate that simulated the CN concentration encountered during a blow out. The CN level in the RBC influent was increased from 0 to 16 mg/l over a 20-hour period. Two hours into the test, nitrification ceased and the free CN concentration in the tank peaked at 2.1 mg/l after six hours of potassium cyanide addition. After the addition of potassium cyanide was stopped, and the free cyanide concentration returned to previous levels, nitrification resumed with no indication of biomass damage.

Accordingly, CN causes a temporary loss of nitrification and ammonia breakthrough can occur. However, the fixed film biological system can be acclimatized to CN increases experienced during a blast-furnace blow out by the gradual addition of free cyanide, e.g. potassium cyanide, about one week prior to the blow out.

0110715

- 22 -

CLAIMS:-

1. A process for treating wastewater containing 50 to 600 ppm ammonia and having a chemical oxygen demand of 50 to 150 ppm to achieve substantially complete nitrification of said ammonia into nitrite and/or nitrate, characterized by mirobially treating the wastewater in a fixed film biological treatment system which includes microorganisms capable of converting ammonia to nitrite and microorganisms capable of converting nitrite to nitrate, adding phosphorus to the wastewater, maintaining the pH of the wastewater in a range in which generation of free ammonia during the treatment is avoided, and controlling the concentration of contaminants in the wastewater to avoid peak concentrations which would damage said microorganisms, including pre-treating, as necessary, to remove contaminants.

2. A process as claimed in claim 1, characterized in that the wastewater contains free cyanide and the treatment system includes microorganisms which remove said free cyanide.

3. A process as claimed in claim 2, characterized in that the treatment system is periodically acclimatized to expected peaks in concentration of said free cyanide.

4. A process as claimed in any preceding claim, characterized in that the pH is maintained at 6.5 to 9.0.

5. A process as claimed in any preceding claim, characterized in that the treatment system is a rotating biological contactor.

6. A process as claimed in claim 5, characterized in that said rotating biological contactor has an ammonia loading of no more than 1.4 pounds of ammonia per 1000 square feet of surface area (6.8 kg per 1000 $m^2$).

7. A process as claimed in any preceding claim, characterized in that the temperature of the wastewater is maintained at 40 to 100°F (4 to 38°C).

8. A process as claimed in any preceding claim, characterized in that said wastewater contains at least 1.5 ppm dissolved oxygen.

9. A process as claimed in any preceding claim, characterized in that said wastewater is pretreated to remove alkaline earth and heavy metal ions.

10. A process as claimed in any preceding claim, characterized in that said wastewater is blast furnace blowdown water.

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| Y | JOURNAL OF APPLIED CHEMISTRY, volume 4, August 1954, Society of Chemical Industry, (LONDON, GB) A. PETTET et al. "Biological treatment of cyanides with and without sewage", pages 434-444 <br> * pages 433,434 "conclusions" * <br> --- | 1-3 | C 02 F 3/04 <br> C 02 F 3/06 <br> C 02 F 3/08 |
| Y | JOURNAL OF WATER POLLUTION CONTROL FEDERATION, volume 48, no. 1, January 1976 (WASHINGTON D.C.,US) C. LUE-HING et al. "Biological nitrification of sludge supernatant by rotating disks", pages 25-46 <br> * page 45, "conclusions"; page 25 - page 26 till Materials and Methods; page 28, table I (NH3-N), page 32, table III (Loading); page 33, table V (Loading) * <br> --- | 1,5-8 | |
| Y | GB-A- 847 640 (SIMON-CARVES) <br><br> * pages 10,11; claims 1-3,5,6,9,10; page 1, lines 1-57; page 4, lines 82-86; page 4, line 102 - page 5, line 46 * <br><br> ----- | 1,2,4, 9 | **TECHNICAL FIELDS SEARCHED (Int. Cl. 3)** <br><br> C 02 F |

The present search report has been drawn up for all claims

| Place of search | Date of completion of the search | Examiner |
|---|---|---|
| THE HAGUE | 01-03-1984 | TEPLY J. |